# EUROPEAN PATENT SPECIFICATION

(11) **EP 2 375 114 B1**
(45) Date of publication and mention of the grant of the patent: **21.12.2016**
(21) Application number: 10425111.1
(22) Date of filing: 09.04.2010
(51) Int. Cl.: F16K 31/06, F15B 13/04, F15B 11/16

(54) **An improved "Flow Sharing" distributor valve**
Verbessertes strömungsteilendes Verteilerventil
Valve de distribution à partage de flux améliorée

(43) Date of publication of application: 12.10.2011
(73) Proprietor: Bosch Rexroth Oil Control S.p.A., 20149 Milano (IT)
(72) Inventor: Dallaglio, Mauro, 42030 Vezzano sul Crostolo (Reggio Emilia) (IT); Bollero, Vincenzo Domenico, 20063 Cernusco sul Naviglio (Milano) (IT)
(74) Representative: Colò, Chiara

(56) References cited:
- EP-A2- 0 251 172
- WO-A1-93/21447
- WO-A1-2005/038268
- DE-A1- 4 005 966
- US-A- 5 186 000

## Description

The invention relates to a flow-sharing distributor.

Flow-sharing distributors are known, normally four-way and three-position, compensated and having proportional control or on-off control.

As is known, compensated distributors, proportional or on-off distributors are able to send a determined flow rage of fluid to an actuator independently of the load acting on the actuator. The fluid flow-rate depends only on the position assumed by a control spool following a command given by an operator.

Additionally, flow-sharing distributors enable proportional sharing of a fluid flow sent from a pump to a plurality of actuators which are contemporaneously commanded independently of the working pressure which each of them has to develop. These distributors enable realising simultaneity of movement of several actuators as they share out the fluid flow available in a fixed percentage to each actuator, without increasing the percentage sent to the actuator which offers smallest resistance, as would happen with traditional distributors.

The percentage of fluid destined for each actuator depends on the degree of aperture, or passage section, which the operator has set on each element of the distributor by activating the command which acts on the control spool, of each element of the distributor. Let us suppose, by way of example, that the operator has contemporaneously activated three command levers and has set apertures respectively of 1.0 mm², 1.5 mm² and 2.5 mm² (total 5.0 mm²) towards three actuators: respectively 20%, 30% and 50% of the available fluid flow will be sent to the actuators, and therefore if the available fluid is 20 litres/min, the flow rates will be 4 litres/min, 6 litres/min and 10 litres/min, while if the available fluid is 30 litres/min, the flow rates will be 6 litres/min, 9 litres/min and 15 litres/min, independently of the working pressure of each actuator, naturally on the condition that the various pressures are all less than the pressure generated by the pump, or more precisely, the pressure present in the main channel of the distributor.

These distributors comprise a control spool which is slidable in a cylindrical seating by means of a very precise coupling. The control spools are axially displaced between a central position, a first position and a second position via a command (electromagnetic, mechanical, hydraulic, pneumatic etc.) set by the operator such as progressively to open passage holes through a plurality of longitudinal channels. These passage holes, in the first position of the control spool, enable passage of pressurised fluid in the desired quantity towards a first opening connected to the actuator, and, at the same time, enable discharging return through a second opening, in a case in which the actuator to be activated is a double-acting actuator. In the second position of the control spool the flow of the pressurised fluid is inverted. In the central position of the control spool the channel of arrival of the pressurised fluid is intercepted and closed. In these distributors, the eventual excess fluid flow rate is conveyed directly in discharge from the distributor inlet element, or is annulled by the pump capacity control system, in a case of plants with variable-capacity plants.

In the case of the double-acting actuator, for example a hydraulic cylinder having a base at one side and a stem on the other side, in order to realise a same displacement velocity in extension (fluid sent to the base) and in retraction (fluid sent to the annular chamber, stem side), the fluid flows must be different to one another, and precisely must be in a ratio corresponding to the ratio between the two areas of the cylinder.

In this case, given an even displacement, the command spool must open different passage holes according to whether the fluid is sent to the first opening or the second opening. Further, the opening curve too, as a function of the axial displacement of the passage holes, which generally commences very progressively, and therefore the form of the longitudinal channels, must be different on the two sides.

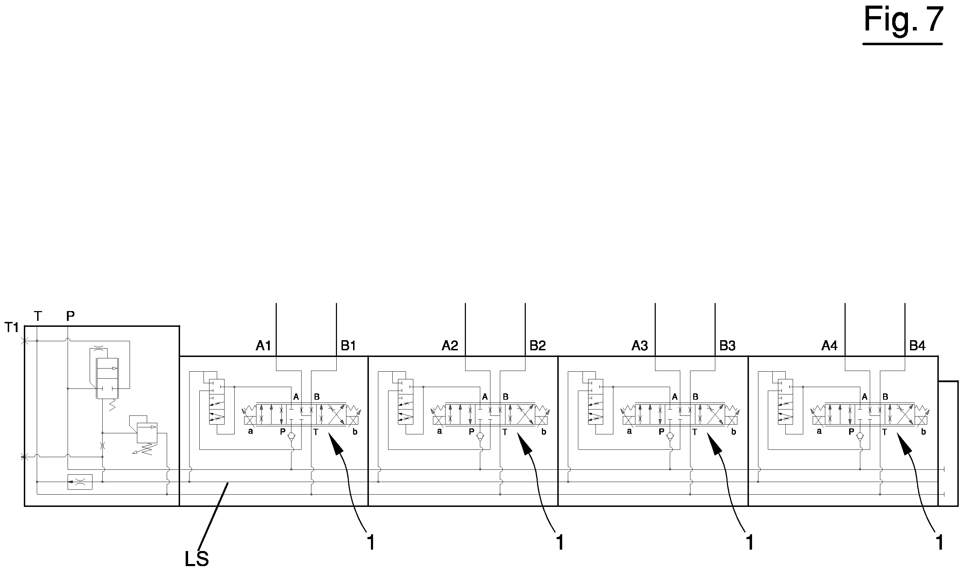

Flow-sharing distributors dispense the pressurised fluid flow through three-way pressure compensators such as to share the fluid as mentioned herein above. For this purpose a load sensing signal LS is used, i.e. a pressure signal derived in cascade from each of the lines which go to the various actuators through a selector valve circuit, as shown in figure 7 where A₁, B₁, A₂, B₂, ....denote the connections among the various distributors and actuators. The circuit LS provides in output the highest pressure level, which is used for commanding the flow dispensing pump or the general flow regulator situated in the inlet element of the distributor. The signal LS is channelled on the blind end of each compensator, while the pressure in the main channel arrives at the inlet of each compensator (when the respective element is activated), which pressure is the highest pressure level available to the actuators. Each three-way compensator is pushed to open by the pressure difference P_{PRINC}-P_{LS} = ΔP, to which an axial position of equilibrium of the compensator corresponds, which depends on the entity of the opening set by the operator via the command spool.

Flow-sharing distributors of known type exhibit an inlet opening to which the pressure dispensed by the pump arrives, and an intermediate conduit predisposed to connect the inlet opening with the flow rate compensator.

The connection between the inlet opening and the flow rate compensator opens when the control rod is activated to displace towards the first position or the second position.

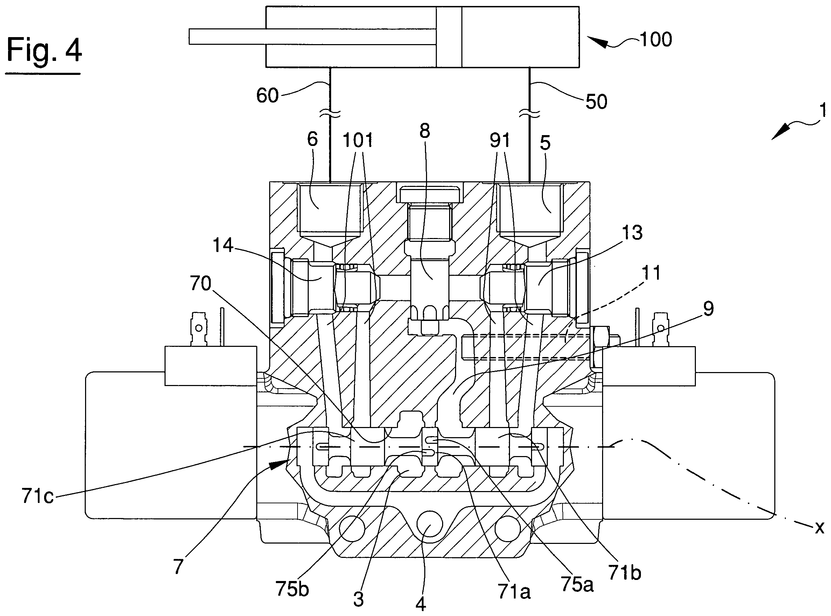

The fluid flow rate flowing from the inlet opening towards the intermediate conduit (see figure 4), given a same quantity of fluid dispensed, creates different dynamic thrusts according to when the control spool is displaced towards the first position or towards the second position. Given an equal passage section, the surfaces delimiting the open part of the longitudinal channels are arranged differently, such that the force required for positioning the control spool in the first position is different from that required for positioning the control spool in the second position. This does not constitute a problem if the force available for commanding the control spool is considerable (for example 20-50 daN, as in the case of manual commands or hydraulic servo commands). It can become a problem in small-dimension distributors (for fluid flows of up to 50-60 litres/min), when the control spool is directly activated via solenoids able to develop forces of up to 10 daN. In these cases, given equal electromagnetic forces transmitted to the control spool, there can be flow rate differences according to the displacement direction of the control spool itself.

Further, the maximum flow rate, which is dispensed in the fully open position of the control spool, depends on the entity of the passage section available for the fluid, i.e. the maximum surface delimited by the longitudinal channel. Consequently, during testing or fine adjustment of a circuit comprising the distributor, in order to dispense different fluid flows it is necessary to replace the control spool with another having longitudinal channels with different sections. This operation is rather long and laborious.

**Document** DE4005966 **discloses a valve arrangement for the control of several hydraulic users actuated in parallel. The speed determining piston section is arranged between housing chambers which combine into a common inlet and outlet channel. The housing chambers have control edges which work in conjunction with the corresponding control edges for the control piston section. The valve arrangement allows a symmetrical layout for the position control valve, and avoids the danger of a pressure drop to the user, but requires anyway the replacing of the spool during adjustment.**

The aim of the present invention is to provide a flow-sharing distributor which enables the drawbacks in the distributors of known type to be obviated.

An advantage of the distributor of the present invention is that it requires equal forces for displacement of the control spool in both displacement directions.

A further advantage of the distributor of the present invention is that it enables precise regulation of the maximum dispensable fluid flow, without there being any need to have recourse to the replacement of the control spool.

Further characteristics and advantages of the invention will better emerge from the following description of a preferred embodiment of the invention, given by way of non-limiting example, with reference to the accompanying figures of the drawings, in which:
figures 1, 2 and 3 show the distributor of the present invention in three operating configurations;
figures 4, 5, 6 show the distributor of the present invention in an alternative embodiment, in three different operating configurations;
figure 7 is a diagram of a circuit in which several distributors of the present invention can be used in parallel.

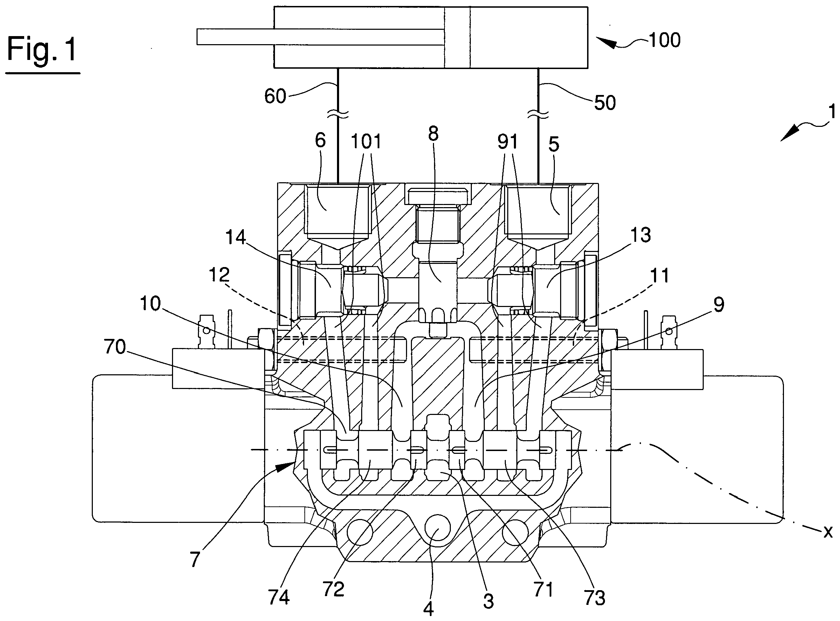

With reference to the figures of the drawings, the four-way three-position hydraulic distributor of the present invention, denoted in its entirety by numeral 1, comprises an inlet opening 3, predisposed to connect with a source P of pressurised operating fluid (figures 1 and 7). This source is typically constituted by a pump, but might also be of a different type. The distributor further comprises a discharge opening 4, predisposed to connect with a tank or a low-pressure environment T. A first opening 5 is predisposed to connect with a first connection 50 of an actuator 100, through which the sending of pressurised fluid determines for example a rising or extension of the actuator, or the rotation of the actuator in a direction. A second opening 6 is predisposed to connect with a second connection 60 of the actuator 100 through which the sending of pressurised fluid determines the descent or shortening of the actuator, or the rotation of the actuator in the opposite direction. For the sake of simplicity, the connecting circuits between the first and the second openings 5, 6 and the actuator 100 are represented very schematically, with the absence of other components interposed between the distributor 1 and the actuator 100.

A control spool 7 is mobile between a central position, a first position and a second position.

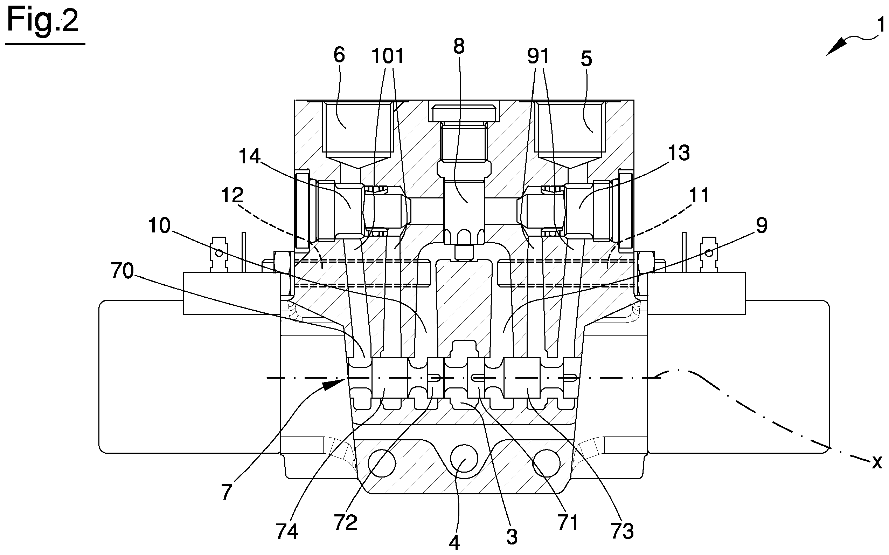

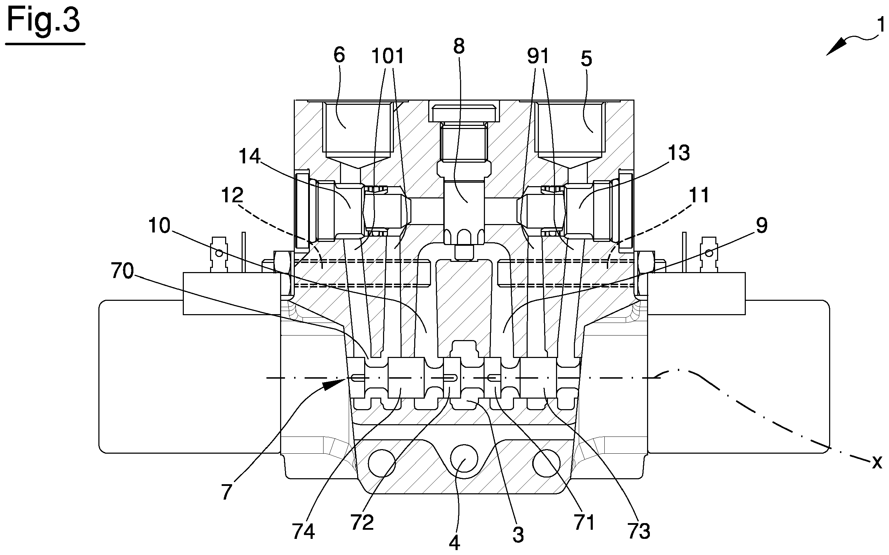

In the central position of the control spool 7, visible in figure 1, the inlet opening 3, which is in communication with the pump or with the general flow-rate regulator situated in the inlet element of the distributor, is closed, such that the fluid coming from the pump or the general flow-rate regulator cannot enter internally of the distributor. In the first position of the control spool 7, visible in figure 2, the inlet opening 3 is set in communication with the first openings 5 and the second opening 6 is in communication with the discharge opening 4. In the second position of the control spool 7, visible in figure 3, the inlet opening 3 is placed in communication with the second opening 6 and the first opening 5 is placed in communication with the discharge opening 4.

The control spool 7 is mobile in a seating 70 between the three positions along an axial direction X. The displacement of the control spool 7 is normally determined by the operator guiding the work machine by means of an electromagnetic, mechanical, hydraulic, pneumatic or other control. The absence of command keeps the control spool 7 in the central position, which corresponds to the inactivity of the actuator 100. A command displacing the control spool towards the first position thereof leads to a sending of the pressurised fluid through the first opening 5 to the first connection 50 of the actuator, to which corresponds the raising or extension or rotation of the actuator in a direction, according to the type of actuator 100. A command displacing the control spool 7 towards the second position thereof leads to sending the pressurised fluid through the second opening 6 to the second connection 60 of the actuator 100, to which corresponds the descent or shortening or rotation of the actuator 100 in an opposite direction.

A flow-rate compensator 8 is interposed between the inlet opening 3 and the first or second opening 6 respectively in the first or second position of the control spool 7. The flow-rate compensator 8 is three-way. As already mentioned in the introductory part of the present description, the compensator 8 receives, at the blind end thereof, a predetermined pressure signal, for example the LOAD SENSING - or LS - signal, while it receives in inlet the pressure dispensed by the pump, when the control spool 7 is in the first or second position thereof. The compensator 8 is pushed to open by the pressure difference ΔP = P_{PRINC}-P_{LS} and reaches an equilibrium position which depends only on the entity of the displacement of the control spool 7, i.e. the operating fluid flow rate sent to the compensator 8. In this way, in a case in which several actuators are to be controlled contemporaneously through respective distributors 1, the flow rates Q in outlet from each compensator 8 towards the respective actuator are empirically calculable as Q=K*S1*(ΔP)^{1/2} and remain in constant reciprocal ratio.

The distributor of the present invention further comprises a first intermediate conduit 9, which connects the inlet opening 3 with the compensator 8 in the first position of the control spool 7, and a second intermediate conduit 10 which connects the inlet opening 3 with the compensator 8 in the second position of the control spool 7.

The presence of two intermediate conduits for connecting the inlet opening 3 with the compensator 8 in the first and the second position of the control spool 7 enables the control spool 7 to be realised with a symmetrical conformation with respect to a perpendicular plane to the axial direction x of movement of the control spool. In this way, the push exerted by the operating fluid on the control spool 7 is the same for both the first and the second position of the control spool and for both displacement directions of the control spool 7 towards the first position and towards the second position.

For this reason (figure 1) the control spool 7 comprises a first sealed section 71 and a second sealed section 72, slidably sealed in the sliding seating 70 of the control spool 7. The sealed sections 71, 72 are symmetrical to one another with respect to a median plane transversal of the control spool 7, and in the central position of the control spool 7 are interposed respectively between the inlet opening 3 and the first intermediate conduit 9 and between the inlet opening 3 and the second intermediate conduit 10. As has already been mentioned, in this position the inlet opening 3, which is in communication with the dispensing line coming from the pump, or from the general flow-rate regulator situated in the inlet element of the distributor, is closed and there is no communication either between the inlet opening 3 and the first opening 5, or between the inlet opening 3 and the second opening 6.

The first and the second sealed sections 71, 72 are provided with longitudinal channels 75 arranged on the respective external surfaces. The longitudinal channels 75 do not run along the whole external surface of the sealed sections 71, 72, but rather extend from an intermediate zone of the external surfaces at the ends of the sealed sections facing respectively towards the first intermediate conduit 9 and the second intermediate conduit 10. The function of the longitudinal channels 75 is to realise the communication between the inlet opening 3 and the first intermediate conduit 9 or the second intermediate conduit 10 following an axial displacement of the control spool 7 which brings the channels 75 to face the inlet opening 3, as can be seen in figures 2 and 3.

As visible in figure 2, in the first position of the control spool 7 the longitudinal channels 75 of the first sealed portion 71 face the inlet opening 3, such that the first sealed section 71 frees a communication between the inlet opening 3 and the first intermediate conduit 9. The second sealed section 72 prevents any communication between the inlet opening 3 and the second intermediate conduit 10. In the second position of the control spool 7 the first sealed section 71 prevents any communication between the inlet opening 3 and the first intermediate conduit 9, while the second sealed section 72, through the longitudinal channels 75 which face the inlet opening 3, frees a communication between the inlet opening 3 and the second intermediate conduit 10.

The control spool 7 further comprises a third sealed section 73 and a fourth sealed section 74, sealedly slidable in the sliding seating 70 of the control spool 7, which are symmetrical to one another with respect to a median transversal plane of the control spool 7. In the central position of the control spool 7, illustrated in figure 1, the third and the fourth sealed sections 73, 74 are interposed respectively between the flow rate compensator 8 and the first opening 5 and between the flow rate compensator 8 and the second opening 6.

A first single-acting valve 13 and a second single-acting valve 14 are preferably interposed between the flow-rate compensator 8 and, respectively, the first opening 5 and the second opening 6. As can be seen in figures 1, 2, 3, the single-acting valves 13, 14 are located along conduits 91, 101 which connect the compensator 8 respectively with the first opening 5 and the second opening 6.

In the first position of the control spool 7 (figure 2), the third sealed portion 73 frees a communication between the flow-rate compensator 8 and the first opening 5, while the fourth sealed portion 74 keeps the communication between the flow-rate compensator 8 and the second opening 6 closed. In these conditions, the pressurised fluid coming from the inlet opening 3, passing through the first intermediate conduit 9, the flow compensator 8, the first single-acting valve 13 and a following conduit 91, reaches the first opening 5. In the second position of the control spool 7, the third sealed portion 73 maintains the communication between the compensator 8 and the first opening 5 closed, while the fourth sealed portion 74 frees a communication between the compensator 8 and the second opening 6, such that the pressurised fluid coming from the inlet opening 3, passing through the second intermediate conduit 10, the flow-rate compensator 8, the second single-acting valve 14 and a successive conduit 101, reaches the second opening 6.

The distributor of the present invention further comprises a first choke 11 predisposed to vary the passage section of the first intermediate conduit 9, such as to enable regulation of the flow rate along the first intermediate conduit 9. A second choke 12 can advantageously be arranged along the second intermediate conduit 10 in order to enable variation of the passage section and the regulation of the flow rate along the second intermediate conduit 10.

The presence of the chokes 11, 12, which can be constituted for example by variable chokes with screw regulation, enables the maximum flow rate of fluid dispensed to the actuator 100 to be regulated, and thus also the maximum displacement velocity of the actuator, without there being any need to replace the control spool 7 with a control spool having sealed sections exhibiting a different section shape, as is necessary with known-type distributors.

The use of an adjustable choke 11, for the above-described reasons, is also extremely advantageous in a distributor provided with a single intermediate conduit 9, as shown in figure 4.

Similarly to the distributor of figures 1, 2, 3, the distributor in the embodiment of figures 4, 5 and 6 comprises an inlet opening 3, predisposed to connect with a pressurised fluid source. The distributor further comprises a discharge opening 4, predisposed to connect with a tank or low-pressure environment. A first opening 5 is predisposed to connect with a first connection 50 of an actuator 100, through which the sending of pressurised fluid determines for example a raising or and extension of the actuator, or rotation thereof in a direction. A second opening 6 is predisposed to connect with a second connection 60 of the actuator 100 through which the sending of pressurised fluid determines the descent or shortening of the actuator, or the rotation thereof in an opposite direction.

A control spool 7 is mobile between a central position, a first position and a second position.

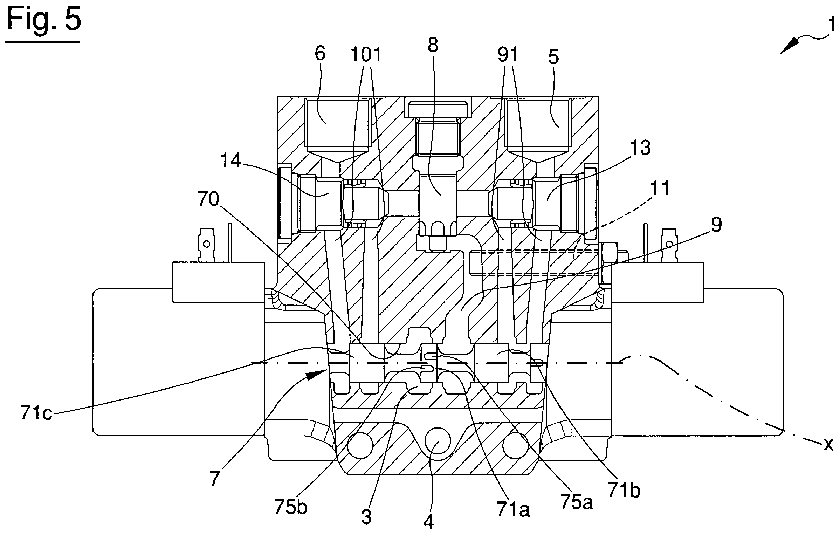

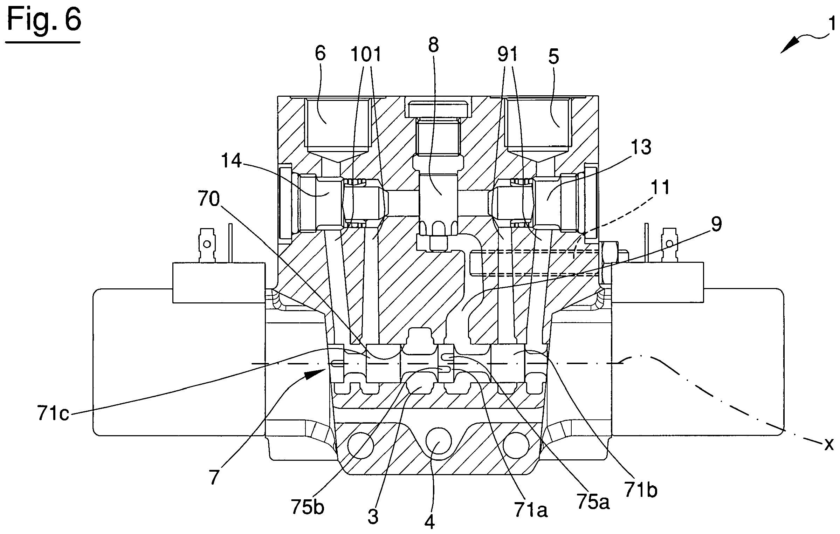

In the central position of the control spool 7, visible in figure 4, the inlet opening 3, which is set in communication with the dispensing line coming from the pump, or from the general flow-rate regulator situated in the inlet element of the distributor, is closed, such that the pressurised fluid cannot enter the distributor. In the first position of the control spool 7, visible in figure 5, the inlet opening 3 is set in communication with the first opening 5 and the second opening 6 is set in communication with the discharge opening 4. In the second position of the control spool 7, visible in figure 6, the inlet opening 3 is placed in communication with the second opening 6 and the first opening 5 is set in communication with the discharge opening 4.

As with the distributor of figures 1, 2, 3, the control spool 7 is mobile between the three positions thereof along an axial direction X in a seating 70. The displacement of the control spool 7 is normally determined by the operator controlling the work machine by means of an electromagnetic, mechanical, hydraulic, pneumatic or other command. The absence of a command keeps the control spool 7 in its central position, to which corresponds the inactivity of the actuator 100. A command displacing the control spool towards the first position thereof sends the pressurised fluid through the first opening 5 to the first connection 50 of the actuator, to which corresponds a rising or extension or rotation in a direction of the actuator, according to the type of actuator 100. A command displacing the control spool 7 towards the second position thereof sends pressurised fluid through the second opening 6 to the second connection 60 of the actuator 100, to which corresponds a descent or shortening or rotation in an opposite direction of the actuator 100.

A three-way flow-rate compensator 8 is interposed between the inlet opening 3 and the first 5 or the second opening 6 respectively in the first or the second control spool 7 position. The flow-rate compensator 8 is a three-way compensator, similar to the distributor in the first embodiment of figures 1, 2, 3.

The distributor in the second embodiment comprises a first intermediate conduit 9, which connects the inlet opening 3 with the compensator 8 in the first position of the control spool 7. A choke 11, preferably adjustable, is arranged along the intermediate conduit 9 to enable regulation of the flow rate along the intermediate conduit 9.

The control spool 7 (figure 4) comprises a first sealed section 71a, a second sealed section 71b and a third sealed section 71c which are sealedly slidable in the sliding seating 70 of the control spool 7.

The sealed sections 71a, 71b, 71c are arranged in such a way that in the central position of the control spool 7 the first sealed section 71a is interposed between the inlet opening 3 and the intermediate conduit 9. The second and the third sealed sections 71b, 71c prevent fluid communication between the compensator 8 and, respectively, the first and the second openings 5, 6. As already mentioned, in this position there is no communication either between the inlet opening 3 and the first opening 5, nor between the inlet opening 3 and the first opening 5, nor between the inlet opening 3 and the second opening 6. The first sealed section 71a is provided with longitudinal channels 75a, 75b arranged on the external surface of the section 71a. The longitudinal channels 75a, 75b do not run along the whole external surface of the first sealed section 71a, but extend from an intermediate zone of the external surface at the two ends of the sealed section 71a facing respectively towards the first intermediate conduit 9 and the first opening 3. The function of the longitudinal channels 75a, 75b is to realise a communication between the inlet opening 3 and the intermediate conduit 9 following an axial displacement of the control spool 7 which brings the channels 75a, 75b to face the inlet opening 3, as can be seen in figures 5 and 6.

In this case too, a first single-acting valve 13 and a second single-acting valve 14 are interposed between the flow-rate compensator 8 and, respectively, the first opening 5 and the second opening 6. As can be seen in figures 4, 5, 6, the single-acting valves 13, 14 are located along conduits 91, 101 which connect the compensator 8 respectively to the first opening 5 and to the second opening 6.

As can be seen in figure 5, in the first position of the control spool 7 the longitudinal channels 75a of a first group face the inlet opening 3, such that a communication is freed between the inlet opening 3 and the intermediate conduit 9. At the same time, the second sealed section 71b frees a communication between the compensator 8 and the first opening 5, while the third sealed section 71c keeps the communication between the compensator 8 and the second opening 6 closed. In these conditions the operating fluid flows from the inlet opening 3 through the intermediate conduit 9, the compensator 8, the first single-acting valve 13 and a subsequent conduit 91 up to the first opening 5.

In the second position of the control spool 7, visible in figure 6, the longitudinal channels 75b of a second group face the inlet opening 3, such that a communication between the inlet opening 3 and the intermediate conduit 9 is freed. At the same time, the third sealed section 71c frees a communication between the compensator 8 and the second opening 6, while the second sealed section 71b keeps the communication between the compensator 8 and the first opening 5 closed. In these conditions the operating fluid flows from the inlet opening 3 through the intermediate conduit 9, the compensator 8, the second single-acting valve 14 and a successive conduit 101 up to the second opening 6.

## Claims

1. A four-way three-position hydraulic distributor, comprising: an inlet opening (3), predisposed to connect with a pressurised operating fluid source; a discharge opening (4), predisposed for connecting with a tank or a low-pressure environment; a first opening (5), predisposed to connect with a first connection (50) of an actuator (100) or a first actuator; a second opening (6), predisposed to connect with a second connection (60) of the actuator (100) or with a second actuator; a control spool (7), mobile between a central position, in which the inlet opening (3) is closed, a first position, in which the inlet opening (3) is set in communication with the first opening (5) and the second opening (6) is set in communication with the discharge opening (4), and a second position, in which the inlet opening (3) is set in communication with the second opening (6) and the first opening (5) is set in communication with the discharge opening (4); a flow-rate compensator (8), interposed between the inlet opening (3) and the first opening (5) or the second opening (6) respectively in the first position or the second position of the control spool (7); a first intermediate conduit (9), which connects the inlet opening (3) with the compensator (8) in the first position of the control spool (7), and a second intermediate conduit (10), which connects the inlet opening (3) with the compensator (8) in the second position of the control spool (7);
**characterised in that** it comprises a first choke (11) predisposed to enable regulation of the flow rate along the first intermediate conduit (9).

2. The distributor of claim 1, comprising a second choke (12) predisposed to enable regulation of the flow rate along the second intermediate conduit (10).

3. The distributor of one of the preceding claims, wherein a first single-acting valve (13) and a second single-acting valve (14) are interposed respectively between the flow-rate compensator (8) and the first opening (5) and the second opening (6).

4. The distributor of one of the preceding claims, wherein the control spool (7) comprises a first sealed section (71) and a second sealed section (72), symmetrical to one another with respect to a median plane that is perpendicular to the control spool (7), which first sealed section (71) and second sealed section (72), in a central position of the control spool (7), are interposed respectively between the inlet opening (3) and the first intermediate conduit (9) and between the inlet opening (3) and the second intermediate conduit (10).

5. The distributor of claim 4, wherein: in the first position of the control spool (7), the first sealed section (71) frees a communication between the inlet opening (3) and the first intermediate conduit (9), while the second sealed section (72) prevents any communication between the inlet opening (3) and the second intermediate conduit (10); in the second position of the control spool (7), the first sealed section (71) prevents any communication between the inlet opening (3) and the first intermediate conduit (9), while the second sealed section (72) frees a communication between the inlet opening (3) and the second intermediate conduit (10).

6. The distributor of claim 4, wherein the control spool (7) comprises a third sealed section (73) and a fourth sealed section (4), symmetrical to one another with respect to a median plane transversal of the control spool (7), which third sealed section (73) and fourth sealed section (4), in the central position of the control spool (7), are interposed respectively between the flow-rate compensator (8) and the first opening (5) and between the flow-rate compensator (8) and the second opening (6).

7. The distributor of claim 6, wherein: in the first position of the control spool (7), the third sealed portion (73) frees a communication between the flow-rate compensator (8) and the first opening (5), while the fourth sealed portion (74) keeps the communication between the flow-rate compensator (8) and the second opening (6) closed; in the second position of the control spool (7), the third sealed portion (73) keeps the communication between the compensator (8) and the first opening (5) closed, while the fourth sealed portion (74) frees a communication between the compensator (8) and the second opening (6).

8. The distributor of one of the preceding claims, comprising a single intermediate conduit (9), which connects the inlet opening (3) with the compensator (8) in the first position of the control spool (7), and a single choke (11), arranged along the first intermediate conduit (9) for enabling regulation of the flow rate along the first intermediate conduit (9).

## Patentansprüche

1. Vierwege-Hydraulikverteiler mit drei Stellungen, umfassend: eine Einlassöffnung (3), ausgelegt, um mit einer Quelle eines mit Druck beaufschlagten Prozessmediums verbunden zu werden; eine Auslassöffnung (4), ausgelegt, um mit einem Behälter oder einer Niederdruckumgebung verbunden zu werden; eine erste Öffnung (5), ausgelegt, um mit einem ersten Anschluss (50) eines Aktuators (100) oder einem ersten Aktuator verbunden zu werden; eine zweite Öffnung (6), ausgelegt, um mit einem zweiten Anschluss (60) des Aktuators (100) oder mit einem zweiten Aktuator verbunden zu werden; eine Steuerspule (7), die zwischen einer mittigen Position, in der die Einlassöffnung (3) geschlossen ist, einer ersten Position, in der die Einlassöffnung (3) in Kommunikation mit der ersten Öffnung (5) gebracht wird und die zweite Öffnung (6) mit der Auslassöffnung (4) in Kommunikation gebracht wird, und einer zweiten Position, in der die Einlassöffnung (3) in Kommunikation mit der zweiten Öffnung (6) gebracht wird und die erste Öffnung (5) mit der Auslassöffnung (4) in Kommunikation gebracht wird, beweglich ist; einen Durchflussmengenkompensator (8), der zwischen der Einlassöffnung (3) und der ersten Öffnung (5) oder der zweiten Öffnung (6) jeweils in der ersten Position oder der zweiten Position der Steuerspule (7) eingesetzt ist; eine erste Zwischenleitung (9), die die Einlassöffnung (3) mit dem Kompensator (8) in der ersten Position der Steuerspule (7) verbindet, und eine zweite Zwischenleitung (10), die die Einlassöffnung (3) mit dem Kompensator (8) in der zweiten Position der Steuerspule (7) verbindet, **dadurch gekennzeichnet, dass** er eine erste Drossel (11) umfasst, die ausgelegt ist, um die Regulierung der Durchflussmenge entlang der ersten Zwischenleitung (9) zu ermöglichen.

2. Verteiler nach Anspruch 1, umfassend eine zweite Drossel (12), die ausgelegt ist, um die Regulierung der Durchflussmenge entlang der zweiten Zwischenleitung (10) zu ermöglichen.

3. Verteiler nach einem der vorhergehenden Ansprüche, wobei ein erstes einzeln wirkendes Ventil (13) und ein zweites einzeln wirkendes Ventil (14) jeweils zwischen dem Durchflussmengenkompensator (8) und der ersten Öffnung (5) und der zweiten Öffnung (6) eingesetzt sind.

4. Verteiler nach einem der vorhergehenden Ansprüche, wobei die Steuerspule (7) einen ersten abgedichteten Abschnitt (71) und einen zweiten abgedichteten Abschnitt (72) umfasst, die zu einer Medianebene, die senkrecht zur Steuerspule (7) verläuft, symmetrisch zueinander angeordnet sind, wobei der erste abgedichtete Abschnitt (71) und der zweite abgedichtete Abschnitt (72) in einer mittigen Position der Steuerspule (7) jeweils zwischen der Einlassöffnung (3) und der ersten Zwischenleitung (9) und zwischen der Einlassöffnung (3) und der zweiten Zwischenleitung (10) eingesetzt sind.

5. Verteiler nach Anspruch 4, wobei der erste abgedichtete Abschnitt (71) in der ersten Position der Steuerspule (7) eine Kommunikation zwischen der Einlassöffnung (3) und der ersten Zwischenleitung (9) freigibt, während der zweite abgedichtete Abschnitt (72) jede Kommunikation zwischen der Einlassöffnung (3) und der zweiten Zwischenleitung (10) verhindert. In der zweiten Position der Steuerspule (7) verhindert der erste abgedichtete Abschnitt (71) jede Kommunikation zwischen der Einlassöffnung (3) und der ersten Zwischenleitung (9), während der zweite abgedichtete Abschnitt (72) eine Kommunikation zwischen der Einlassöffnung (3) und der zweiten Zwischenleitung (10) freigibt.

6. Verteiler nach Anspruch 4, wobei die Steuerspule (7) einen dritten abgedichteten Abschnitt (73) und einen vierten abgedichteten Abschnitt (4) umfasst, die zu einer Medianebene, die quer zur Steuerspule (7) verläuft, zueinander symmetrisch angeordnet sind, wobei der dritte abgedichtete Abschnitt (7) und der vierte abgedichtete Abschnitt (4) in der mittigen Position der Steuerspule (7) jeweils zwischen dem Durchflussmengenkompensator (8) und der ersten Öffnung (5) und zwischen dem Durchflussmengenkompensator (8) und der zweiten Öffnung (6) eingesetzt sind.

7. Verteiler nach Anspruch 6, wobei der dritte abgedichtete Abschnitt (73) in der ersten Position der Steuerspule (7) eine Kommunikation zwischen dem Durchflussmengenkompensator (8) und der ersten Öffnung (5) freigibt, während der vierte abgedichtete Abschnitt (74) die Kommunikation zwischen dem Durchflussmengenkompensator (8) und der zweiten Öffnung (6) geschlossen hält. In der zweiten Position der Steuerspule (7) hält der dritte abgedichtete Abschnitt (73) die Kommunikation zwischen dem Kompensator (8) und der ersten Öffnung (5) geschlossen, während der vierte abgedichtete Abschnitt (74) eine Kommunikation zwischen dem Kompensator (8) und der zweiten Öffnung (6) freigibt.

8. Verteiler nach einem der vorhergehenden Ansprüche, umfassend eine einzelne Zwischenleitung (9), die die Einlassöffnung (3) mit dem Kompensator (8) in der ersten Position der Steuerspule (7) verbindet, und eine einzelne Drossel (11), die entlang der ersten Zwischenleitung (9) angeordnet ist, um die Regulierung der Durchflussmenge entlang der ersten Zwischenleitung (9) zu ermöglichen.

## Revendications

1. Distributeur hydraulique à quatre voies et à trois positions, comprenant :
une ouverture d'entrée (3) conçue pour se raccorder à une source de liquide de travail sous pression ; une ouverture d'évacuation (4) conçue pour se raccorder à un réservoir ou à un environnement à basse pression ; une première ouverture (5) conçue pour se raccorder à un premier raccordement (50) d'un actionneur (100) ou à un premier actionneur ; une seconde ouverture (6) conçue pour se raccorder à un second raccordement (60) de l'actionneur (100) ou à un second actionneur ; un coulisseau de commande (7), mobile entre une position centrale dans laquelle l'ouverture d'entrée (3) est fermée, une première position dans laquelle l'ouverture d'entrée (3) est mise en communication avec la première ouverture (5) et la seconde ouverture (6) est mise en communication avec l'ouverture d'évacuation (4),
et une seconde position dans laquelle l'ouverture d'entrée (3) est mise en communication avec la seconde ouverture (6) et la première ouverture (5) est mise en communication avec l'ouverture d'évacuation (4) ; un compensateur de débit (8), interposé entre l'ouverture d'entrée (3) et la première ouverture (5) ou la seconde ouverture (6) respectivement dans la première position ou la seconde position du coulisseau de commande (7);
un premier conduit intermédiaire (9), qui raccorde l'ouverture d'entrée (3) au compensateur (8) dans la première position du coulisseau de commande (7), et un second conduit intermédiaire (10), qui raccorde l'ouverture d'entrée (3) au compensateur (8) dans la seconde position du coulisseau de commande (7) ;
**caractérisé en ce qu'**il comprend un premier étranglement (11) conçu pour permettre la régulation du débit le long du premier conduit intermédiaire (9).

2. Distributeur selon la revendication 1, comprenant un second étranglement (12) conçu pour permettre la régulation du débit le long du second conduit intermédiaire (10).

3. Distributeur selon l'une des revendications précédentes, dans lequel une première valve simple effet (13) et une seconde valve simple effet (14) sont interposées respectivement entre le compensateur de débit (8) et la première ouverture (5) et la seconde ouverture (6).

4. Distributeur selon l'une des revendications précédentes, dans lequel le coulisseau de commande (7) comprend une première section d'étanchéité (71) et une seconde section d'étanchéité (72), symétriques l'une à l'autre par rapport à un plan médian qui est perpendiculaire au coulisseau de commande (7), dont la première section d'étanchéité (71) et la seconde section d'étanchéité (72), dans une position centrale du coulisseau de commande (7), sont interposées respectivement entre l'ouverture d'entrée (3) et le premier conduit intermédiaire (9) et entre l'ouverture d'entrée (3) et le second conduit intermédiaire (10).

5. Distributeur selon la revendication 4, dans lequel : dans la première position du coulisseau de commande (7), la première section d'étanchéité (71) libère une communication entre l'ouverture d'entrée (3) et le premier conduit intermédiaire (9), alors que la seconde section d'étanchéité (72) empêche toute communication entre l'ouverture d'entrée (3) et le second conduit intermédiaire (10) ; dans la seconde position du coulisseau de commande (7), la première section d'étanchéité (71) empêche toute communication entre l'ouverture d'entrée (3) et le premier conduit intermédiaire (9), alors que la seconde section d'étanchéité (72) libère une communication entre l'ouverture d'entrée (3) et le second conduit intermédiaire (10).

6. Distributeur selon la revendication 4, dans lequel le coulisseau de commande (7) comprend une troisième section d'étanchéité (73) et une quatrième section d'étanchéité (4), symétriques l'une à l'autre par rapport à un plan médian transversal du coulisseau de commande (7), dont la troisième section d'étanchéité (73) et la quatrième section d'étanchéité (4), dans la position centrale du coulisseau de commande (7), sont interposées respectivement entre le compensateur de débit (8) et la première ouverture (5) et entre le compensateur de débit (8) et la seconde ouverture (6).

7. Distributeur selon la revendication 6, dans lequel : dans la première position du coulisseau de commande (7), la troisième portion d'étanchéité (73) libère une communication entre le compensateur de débit (8) et la première ouverture (5), alors que la quatrième portion d'étanchéité (74) maintient la communication entre le compensateur de débit (8) et la seconde ouverture (6) fermée ; dans la seconde position du coulisseau de commande (7), la troisième portion d'étanchéité (73) maintient la communication entre le compensateur (8) et la première ouverture (5) fermée, alors que la quatrième portion d'étanchéité (74) libère une communication entre le compensateur (8) et la seconde ouverture (6).

8. Distributeur selon l'une des revendications précédentes, comprenant un seul conduit intermédiaire (9), qui raccorde l'ouverture d'entrée (3) au compensateur (8) dans la première position du coulisseau de commande (7), et un seul étranglement (11), disposé le long du premier conduit intermédiaire (9), pour permettre la régulation du débit le long du premier conduit intermédiaire (9).
